# EUROPÄISCHE PATENTSCHRIFT

(11) **EP 1 797 467 B1**
(45) Veröffentlichungstag und Bekanntmachung des Hinweises auf die Patenterteilung: **03.08.2016**
(21) Anmeldenummer: 05798150.8
(22) Anmeldetag: 01.09.2005
(51) Int. Cl.: G02B 6/00

(54) **BELEUCHTUNGSSYSTEM FÜR EINE WAND, EINE DECKE ODER EINEN BODEN**
ILLUMINATION SYSTEM FOR A WALL, A CEILING OR A FLOOR
SYSTEME D'ECLAIRAGE DESTINE A UNE PAROI, UN PLAFOND OU UN PLANCHER

(30) Priorität: 03.09.2004 DE 102004043194
(43) Veröffentlichungstag der Anmeldung: 20.06.2007
(73) Patentinhaber: Kotulla, Carmen, 70372 Stuttgart (DE)
(72) Erfinder: Kotulla, Carmen, 70372 Stuttgart (DE)
(74) Vertreter: BRP Renaud & Partner mbB Rechtsanwälte Patentanwälte Steuerberater
(86) Internationale Anmeldenummer: PCT/DE2005/001529
(87) Internationale Veröffentlichungsnummer: WO 2006/024285

(56) Entgegenhaltungen:
- WO-A1-92/04232
- DE-A1- 19 540 368
- DE-A1- 19 547 267
- FR-A- 2 172 568
- FR-A- 2 174 380
- FR-A- 2 726 069
- FR-A1- 2 718 514

## Beschreibung

Die vorliegende Erfindung betrifft ein Beleuchtungssystem für eine Wand, eine Decke oder einen Boden.

Beleuchtungen werden häufig dazu eingesetzt, Räume mittels Lichteffekte architektonisch zu gestalten. Dabei ist es üblich, Leuchtkörper, in der Regel Glühbirnen, in einer Decke oder in einem Boden des Raums versenkt anzuordnen, siehe zum Beispiel WO 92/04232 und FR2718514.

Die vorliegende Erfindung beschäftigt sich mit dem Problem, für ein Beleuchtungssystem der eingangs genannten Art eine verbesserte Ausführungsform anzugeben, die es insbesondere ermöglicht, zusätzliche besondere Lichteffekte an der Wand, an der Decke oder am Boden zu erzielen.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zur Erzeugung von punktförmigen Lichtemissionen an einer Wand, an einer Decke oder an einem Boden an sich bekannte Lichtaustrittskörper zu verwenden, die über eine Lichtleitfaser an eine Lichtquelle angeschlossen sind. Ermöglicht wird dabei die Verwendung dieser Lichtaustrittskörper durch spezielle lichtdurchlässige Schutzkörper, die im montierten Zustand den jeweiligen Lichtaustrittskörper zu einer Oberfläche der Wand, der Decke oder des Bodens hin abdecken und dabei flächenbündig zur Oberfläche positioniert sind. Durch die erfindungsgemäße Bauweise kann die Gefahr einer Beschädigung des Lichtaustrittskörpers durch Kontakt mit harten Gegenständen reduziert werden. Insbesondere ermöglicht es die erfindungsgemäße Bauweise, derartige, über Lichtleitfasern gespeiste Lichtaustrittskörper in einem Boden sowie in einer Wand anzuordnen, wo besonders große Gefahren für Beschädigungen durch Kontaktierung bestehen. Des Weiteren erleichtert der Schutzkörper eine formschöne Integration der Lichtaustrittskörper in die Wand, die Decke oder den Boden.

Vorzugsweise ist der Schutzkörper wasserdicht und/oder trittfest ausgestaltet und außerdem im montierten Zustand wasserdicht und/oder trittfest in die Wand, die Decke oder den Boden eingebaut. Mit Hilfe des trittfesten Schutzkörpers können die Lichtaustrittskörper ohne weiteres in Böden integriert werden, was besondere designerische und architektonische Gestaltungseffekte ermöglicht. Durch die wasserdichte Ausgestaltung und Montage des Schutzkörpers kann dieser auch in Nassbereichen und Feuchtzonen ohne weiteres montiert werden. Insbesondere ist auch eine Anordnung unter Wasser oder eine von Wasser überströmte Positionierung möglich.

Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

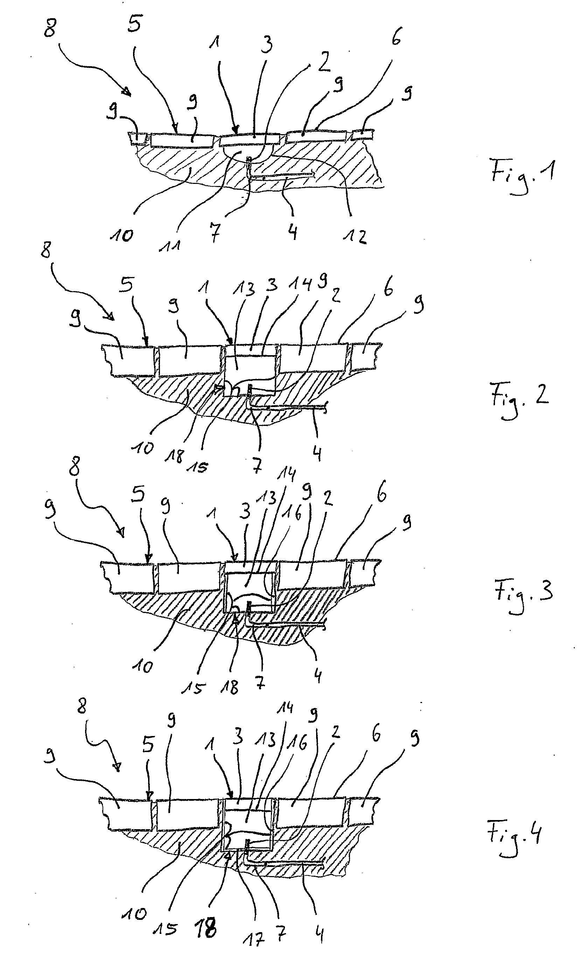

Es zeigen, jeweils schematisch, Fig. 2 bis 5 stark vereinfachte Querschnitte durch eine Wand, eine Decke oder einen Boden mit dem erfindungsgemäßen Beleuchtungssystem.

Gemäß den Fig. 2 bis 5 umfasst ein erfindungsgemäßes Beleuchtungssystem 1 einen punktförmigen Lichtaustrittskörper 2 sowie einen lichtdurchlässigen Schutzkörper 3. Der Lichtaustrittskörper 2 ist "punktförmig", weil er einen punktförmigen Lichtaustritt ermöglicht. Selbstverständlich kann der punktförmige Lichtaustritt durch eine entsprechende Optik gezielt gestreut werden. Der Lichtaustrittskörper 2 ist an eine Lichtleitfaser 4, z.B. eine Glasfaser, angeschlossen, die ihrerseits an eine hier nicht gezeigte Lichtquelle anschließbar ist bzw. in montiertem Zustand angeschlossen ist.

Bei den hier gezeigten Darstellungen befindet sich das Beleuchtungssystem 1 in einem montierten Zustand, das heißt, das Beleuchtungssystem 1 ist in eine Wand, eine Decke oder einen Boden 5 eingebaut. Im eingebauten Zustand ist der Lichtaustrittskörper 2 bezüglich einer Oberfläche 6 der Wand, der Decke oder des Bodens 5 zurückversetzt positioniert. Des Weiteren erstreckt sich die Lichtleitfaser 4 beabstandet zur Oberfläche 6 im wesentlichen parallel zu dieser. Damit das Beleuchtungssystem 1 nur eine möglichst geringe Bauhöhe besitzt, ist der Lichtaustrittskörper 2 hier außerdem mit einem Umlenkabschnitt 7 ausgestattet, der die Lichtleitfaser 4 oder zumindest das zugeführte Licht um etwa 90° umlenkt. Auf diese Weise kann zum einen die Lichtleitfaser 4 parallel zur Oberfläche 6 bis zum Lichtaustrittskörper 2 herangeführt werden, und zum anderen kann der Lichtaustrittskörper 2 bezüglich seiner Lichtabstrahlrichtung senkrecht zur Oberfläche 6 positioniert werden. Diese Positionierung des Lichtaustrittskörpers 2 ermöglicht optimale Lichteffekte.

Im gezeigten montierten Zustand ist der Schutzkörper 3 in der Wand, der Decke oder dem Boden 5 so angeordnet, dass er den Lichtaustrittskörper 2 zur Oberfläche 6 hin abdeckt und dabei flächenbündig zur Oberfläche 6 positioniert ist. Auf diese Weise ist der Lichtaustrittskörper 2 vor schädlichen Einflüssen geschützt.

Der Schutzkörper 3 ist trittfest, wasserdicht und vorzugsweise kratzfest ausgestaltet und ebenso in die Wand, die Decke oder den Boden 5 eingebaut. Vorzugsweise besteht der Schutzkörper 3 aus Glas, vorzugsweise aus Sicherheitsglas oder aus Panzerglas. Ebenso kann der Schutzkörper aus Kunstglas bestehen. Desweiteren kann es sinnvoll sein, den Schutzkörper 3 aus einem Doppelglas, insbesondere aus einem Verbundglas, herzustellen. Hierdurch ist es beispielsweise möglich, die außenliegende Glasschicht bedarfsabhängig, beispielsweise nach entsprechender Abnutzung zu ersetzen.

Bei den hier gezeigten Ausführungsformen ist die Wand, die Decke oder der Boden 5 im Bereich des Schutzkörpers 3 als Mosaik 8 ausgestaltet, das aus einer Vielzahl von einzelnen Mosaikelementen 9 besteht. Unter einem Mosaik 8 wird im vorliegenden Zusammenhang eine Anordnung von Mosaikelementen 9 verstanden, die sich hinsichtlich Form, Farbe, Material und Größe voneinander unterscheiden können und in ihrer Gesamtheit einen künstlerischen, grafischen oder bildhaften optischen Gesamteindruck erzeugen. Die hierzu verwendeten Mösaikelemente 9 sind typischer Weise relativ klein und im Durchmesser in der Regel kleiner als 5 cm, vorzugsweise kleiner als 2 cm, z.B. zwischen 0,5 cm und 1,5 cm.

Wie aus den Fig. 1 bis 5 zu entnehmen ist, besitzt der Schutzkörper 3 in einer Draufsicht auf die Oberfläche 6 im wesentlichen dieselben Abmessungen wie die Mosaikelemente 9. Durch diese Bauweise wird der Schutzkörper 3 ideal in das Mosaik 8 integriert. Gleichzeitig kann auf diese Weise das Beleuchtungssystem 1 einen besonderen gestalterischen Lichteffekt innerhalb des Mosaiks 8 erzeugen. Die einzelnen Mosaikelemente 9 und der Schutzkörper 3 sind dabei in einem Bett 10 gelagert das einen geeigneten Zement oder Klebstoff aufweist. In dieses Bett 10 sind auch der Lichtaustrittskörper 2 und die Lichtleitfaser 4 eingebettet.

Bei der Ausführungsform gemäß Fig. 1 ist an einer von der Oberfläche 6 abgewandten Seite des Schutzkörpers 3 ein Hohlraum 11 ausgebildet, in den der Lichtaustrittskörper 2 hineinragt, um im Betrieb sein Licht durch den Schutzkörper 3 abstrahlen zu können. Dabei kann außerdem eine Art Reflektor 12 vorgesehen sein, der das vom Lichtaustrittskörper 2 emittierte Licht in eine vorbestimmte Richtung fokussiert und/oder in Richtung zum Schutzkörper 3 hin umlenkt.

Bei den Ausführungsformen der Fig. 2 bis 4 ist das Beleuchtungssystem 1 außerdem mit einem Prisma 13 ausgestattet, das im gezeigten montierten Zustand in der Wand, in der Decke oder im Boden 5 montiert ist, und zwar an einer von der Oberfläche 6 abgewandten Seite des Schutzkörpers 3. Dieses Prisma 13 ist an den Lichtaustrittskörper 2 angeschlossen, um das vom Lichtaustrittskörper 2 im Betrieb emittierte Licht in das Prisma 13 einzukoppeln.

Das Prisma 13 ist vorzugsweise durch einen geschliffenen und/oder facettierten Kristallkörper oder Glaskörper oder Edelsteinkörper, z.B. Diamantkörpern gebildet. Auf diese Weise können besonders spektakuläre Lichtbrechungseffekte, insbesondere eine optische Tiefenwirkung, erzielt werden, was die gestalterischen Möglichkeiten mit Hilfe des erfindungsgemäßen Beleuchtungssystems 1 zusätzlich verbessert.

Des Weiteren kann das Prisma 13 optional - abgesehen von einer dem Schutzkörper 3 zugewandten Lichtaustrittsseite 14 - an seiner Oberfläche zumindest teilweise nach innen verspiegelt sein. In den Fig. 2 bis 5 ist eine derartige Verspiegelung mit 15 bezeichnet. Mit Hilfe der Verspiegelung 15 wird zum einen die Lichtemission an der Lichtaustrittsseite 14 verbessert. Gleichzeitig ergeben sich zusätzliche vorteilhafte Reflektionseffekte. Außerdem wird mit Hilfe der Verspiegelung 15 vermieden, dass unerwünschte Einfärbungen durch das benachbarte Bett 10 bzw. durch benachbarte Mosaikelemente 9 das Lichtspiel des Beleuchtungssystems 1 beeinträchtigen.

Grundsätzlich kann das Prisma 13 fest mit dem Schutzkörper 3 verbunden sein. Hierdurch kann stets dieselbe Relativlage zwischen Prisma 13 und Schutzkörper 3 gewährleistet werden, um zusätzliche Beugungseffekte, die beim Lichtübergang zwischen Prisma 13 und Schutzkörper 3 auftreten können, zu definieren. Beispielsweise kann zur Verbindung zwischen Schutzkörper 3 und Prisma 13 ein Klebstoff verwendet werden, der lichtbeständig und lichtdurchlässig ist. Des Weiteren ist dieser Klebstoff blasenfrei auftragbar und aushärtbar. Zweckmäßig handelt es sich beim Klebstoff um einen gelförmigen dauerelastischen Klebstoff.

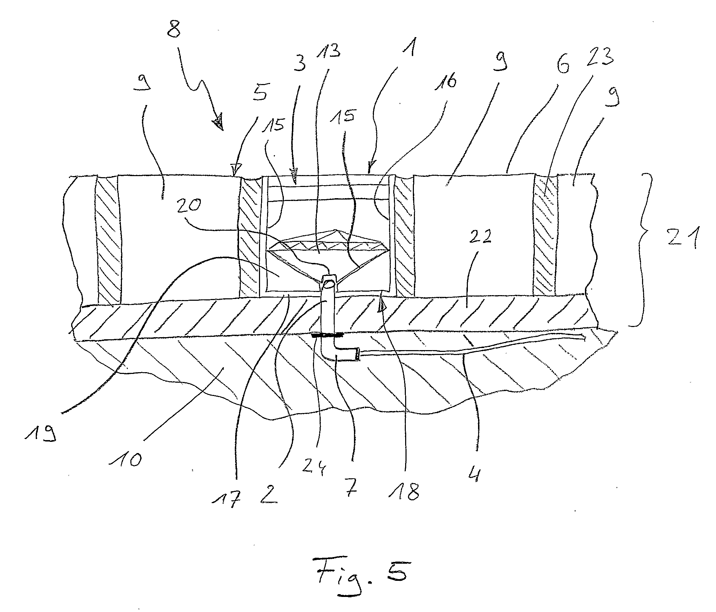

Bevorzugt ist jedoch eine Anordnung, bei der ein Abstand zwischen Prisma 13 und dem Schutzkörper 3 vorhanden ist, was bei der in Fig. 5 wiedergegebenen Ausführungsform besser erkennbar ist.

Bei den Ausführungsformen der Fig. 3 bis 5 ist das Prisma 13 außerdem von einer lichtundurchlässigen Hülse 16 eingefasst. Hierdurch können optische Beeinträchtigungen durch das Bett 10 und/oder durch benachbarte Mosaikelemente 9 ausgeschlossen werden. Des Weiteren kann die Hülse 16 innen die Verspiegelung 15 tragen bzw. aufweisen. Bei der Ausführungsform gemäß Fig. 3 umschließt die Hülse 16 nur das Prisma 13, so dass der Schutzkörper 3 auf das Prisma 13 und auf die Hülse 16 aufgesetzt ist.

Im Unterschied dazu kann bei der in den Fig. 4 und 5 gezeigten Ausführungsform die Hülse 16 außerdem den Schutzkörper 3 einfassen. Auf diese Weise kann an der Oberfläche 6 ein zusätzliches gestalterisches Element gewonnen werden. Des Weiteren kann sich dadurch die Fixierung des Schutzkörpers 3 relativ zum Prisma 13 vereinfachen. Die Hülse 16 kann außerdem an einer vom Schutzkörper 3 abgewandten Seite mit einem lichtundurchlässigen Boden 17 ausgestattet sein, was hier in Fig. 4 angedeutet ist. Durch diesen Boden 17 hindurch ist dann der Lichtaustrittskörper 2 an das Prisma 13 angeschlossen.

Die Hülse 16 kann vorzugsweise an ihren Seitenwänden verspiegelt sein, um die Lichteffekte zu verbessern.

Der Schutzkörper 3, das Prisma 13 und der Lichtaustrittskörper 2 bilden eine vormontierbare Einheit 18.

Mit Hilfe derartiger Einheiten 18 kann die Integration des Beleuchtungssystems 1 in die Wand, die Decke oder den Boden 5 erheblich vereinfacht werden, da diese Einheiten 18 in einer speziell dafür vorgesehenen Produktionsstätte einfach und rationell vorgefertigt werden können. Gleichzeitig vereinfacht sich die Handhabung des Beleuchtungssystems 1, da dessen Einheiten 18 deutlich einfacher manipuliert werden können, um diese an den entsprechenden Stellen in der Wand, der Decke oder dem Boden 5 zu positionieren. Zweckmäßig bildet auch die Hülse 16 einen Bestandteil dieser Einheit 18. Hierdurch vereinfacht sich die Vormontage der Einheit 18, da die Hülse 16 hierbei als Träger für die übrigen Komponenten dienen kann.

Vorzugsweise besteht der Schutzkörper 3 aus einem Glas, insbesondere aus einem mehrschichtigen Verbundglas, oder aus einem Kunstglas.

Die Hülse 16 und/oder ihr Boden 17 besteht vorzugsweise aus Glas, aus einem Kunststoff oder aus Metall. Die Hülse 16 und/oder der Schutzkörper 3 sind zweckmäßig hinsichtlich ihrer Formgebung komplementär zur Außenkontur des Prismas 13 geformt. Beispielsweise besitzen Prisma 13, Schutzkörper 3 und Hülse 16 in einer Draufsicht eine runde, ovale oder kreisförmige, eine mehreckige, rechteckige oder quadratische Kontur.

Entsprechend Fig. 5 ist bei einer bevorzugten Ausführungsform das Prisma 13 vom Schutzkörper 3, der hier als Doppelglas ausgestaltet ist, beabstandet angeordnet. Das Prisma 13 ist dabei in der Hülse 16 fixiert. Die Hülse 16 enthält hierzu beispielsweise eine komplementär zum Prisma 13 geformte Fassung 19, die an einer dem Prisma 13 zugewandten Seite verspiegelt sein kann. Ebenso ist auch die Hülse 16 an ihrer Innenwand vorzugsweise verspiegelt ausgestaltet. Die Verspiegelungen sind auch hier wieder mit 15 bezeichnet.

Der Lichtaustrittskörper 2 ragt in die Hülse 16 hinein. Bemerkenswert ist, dass das Prisma 13 an seiner, dem Lichtaustrittskörper 2 zugewandten Seite eine Aussparung 20 aufweist, welche die Lichteinleitung in das Prisma 13 verbessert.

Zur Installation des Mosaiks 8 wird das gesamte Mosaik 8 oder vorzugsweise ein flächiger Teilbereich des Mosaiks 8 in Form einer Installationseinheit, die hier durch eine geschweifte Klammer gekennzeichnet und mit 21 bezeichnet ist, vorgefertigt. Diese Installationseinheit 21 umfasst eine Trägerplatte 22, die beispielsweise eine Gipskartonplatte oder eine Pressspanplatte oder dergleichen sein kann. Auf dieser Trägerplatte 22 sind die einzelnen Mosaikelemente 9 und die Einheiten 18 des Beleuchtungssystems 1 auf geeignete Weise befestigt, beispielsweise aufgeklebt. Eine Fugenfüllung 23 kann ebenfalls bereits im Rahmen der Herstellung der Installationseinheit 21 angebracht werden. Ebenso kann die Fugenfüllung 23 erst beim Anbringen der Installationseinheit 21 am Boden 5 bzw. an der Wand oder an der Decke angebracht werden. Desweiteren umfasst die Installationseinheit 21 die Lichtaustrittskörper 2, die hierzu durch entsprechende, nicht näher bezeichnete Stecköffnungen in die Trägerplatte 22 eingesetzt sind, beispielsweise mittels eines Bunds 24 an der Trägerplatte 22 fixiert sind. Die Lichtleitfasern 4 können dann auf geeignete Weise an der Trägerplatte 22 befestigt werden. Auf diese Weise lässt sich auch ein relativ großflächiges Mosaik 8 mit Hilfe von Mosaiksegmenten durch die Installationseinheiten 21 vorbereiten bzw. vorfertigen, was die Installation des Mosaiks 8 erheblich vereinfacht. Außerdem kann die Herstellung der Installationseinheiten 21 durch Vorfertigung der Einheiten 18 vereinfacht werden.

Bei der in Fig. 5 gezeigten Ausführungsform sind sowohl der Schutzkörper 3 als auch das Prisma 13 in bzw. an der Hülse 16 befestigt, insbesondere angeklebt. Auf diese Weise sind das Prisma 13 und der Schutzkörper 3 über die Hülse 16 aneinander befestigt.

## Patentansprüche

1. Wand oder Decke oder Boden (5) mit einem Beleuchtungssystem (1),
- mit wenigstens einem punktförmigen Lichtaustrittskörper (2), der über eine Lichtleitfaser (4) an eine Lichtquelle angeschlossen ist und der im montierten Zustand bezüglich einer Oberfläche (6) der Wand, der Decke oder des Bodens (5) zurückversetzt positioniert ist,
- mit einem lichtdurchlässigen Schutzkörper (3), der im montierten Zustand den Lichtaustrittskörper (2) zur Oberfläche (6) hin abdeckt und flächenbündig zur Oberfläche (6) positioniert ist,
- mit einem Prisma (13), das im montierten Zustand in der Wand, in der Decke oder im Boden (5) an einer von der Oberfläche (6) abgewandten Seite des Schutzkörpers (3) positioniert ist und das zur Einkopplung von Licht an den Lichtaustrittskörper (2) angeschlossen ist,
- wobei die Wand, die Decke oder der Boden (5) im Bereich des Schutzkörpers (3) als Mosaik (8) ausgebildet ist, das aus einer Vielzahl von Mosaikelementen (9) besteht, die in einer Draufsicht auf die Oberfläche (6) im Wesentlichen dieselben Abmessungen besitzen wie der jeweilige Schutzkörper (3),
- wobei Schutzkörper (3), Prisma (13) und Lichtaustrittskörper (2) eine vormontierte Einheit (18) bilden,
- wobei das Mosaik (8) ein Bett (10) aus Zement oder Klebstoff aufweist, in das die Einheit (18), die jeweilige Lichtleitfaser (4) und die Mosaikelemente (9) eingebettet sind.

2. Wand oder Decke oder Boden nach Anspruch 1,
**dadurch gekennzeichnet,**
- **dass** der Schutzkörper (3) wasserdicht und/oder trittfest und/oder kratzfest ausgestattet ist und im montierten Zustand wasserdicht und/oder trittfest und/oder kratzfest in die Wand, die Decke oder den Boden (5) eingebaut ist, und/oder
- **dass** der Schutzkörper (3) aus Glas Sicherheitsglas, Panzerglas oder aus Kunstglas besteht.

3. Wand oder Decke oder Boden nach Anspruch 1 oder 2, **dadurch gekennzeichnet,**
- **dass** das Prisma (13) vom Schutzkörper (3) beabstandet angeordnet ist, und/oder
- **dass** das Prisma (13) zur Einkopplung des Lichts des Lichtaustrittskörpers (2) eine Ausnehmung (20) aufweist.

4. Wand oder Decke oder Boden nach einem der Ansprüche 1 bis 3,
**dadurch gekennzeichnet,**
**dass** das Prisma (13) von einer lichtundurchlässigen Hülse (16) eingefasst ist.

5. Wand oder Decke oder Boden nach einem der Ansprüche 1 bis 4,
**dadurch gekennzeichnet,**
- **dass** das Prisma (13) ein geschliffener und/oder facettierter Kristallkörper oder Glaskörper oder Edelsteinkörper oder Diamantkörper ist, und/oder
- **dass** das Prisma (13) an seiner Oberfläche, außer an einer dem Schutzkörper (3) zugewandten Lichtaustrittsseite (14), zumindest teilweise nach innen verspiegelt ist, und/oder
- **dass** das Prisma (13) und der Schutzkörper (3) über die Hülse (16) fest miteinander verbunden sind.

6. Wand oder Decke oder Boden nach Anspruch 5,
**dadurch gekennzeichnet,**
**dass** der Schutzkörper (3) und/oder das Prisma (13) mittels eines lichtbeständigen, lichtdurchlässigen, blasenfreien Klebstoffs an der Hülse (16) befestigt ist.

7. Wand oder Decke oder Boden nach einem der Ansprüche 4 bis 6,
**dadurch gekennzeichnet,**
- **dass** die Hülse (16) außerdem den Schutzkörper (3) einfasst, und/oder
- **dass** die Hülse (16) an einer vom Schutzkörper (3) abgewandten Seite einen lichtundurchlässigen Boden (17) aufweist, durch den hindurch der Lichtaustrittskörper (2) an das Prisma (13) angeschlossen ist.

8. Wand oder Decke oder Boden nach einem der Ansprüche 1 bis 7,
**dadurch gekennzeichnet,**
- **dass** der Lichtaustrittskörper (2) einen Umlenkabschnitt (7) aufweist, der das zugeführte Licht und/oder die Lichtleitfaser (4) um etwa 90° umlenkt.

9. Wand oder Decke oder Boden nach einem der vorhergehenden Ansprüche,
**dadurch gekennzeichnet,**
- **dass** das Mosaik (8) zumindest eine Installationseinheit (21) aufweist, die eine Trägerplatte (22) besitzt, auf der zumindest ein Teil des Mosaiks (8) vormontiert ist.

10. Installationseinheit zum Herstellen eines Mosaiks mit einem Beleuchtungssystem an einer Wand oder einer Decke oder einem Boden nach einem der Ansprüche 1 bis 9, **gekennzeichnet durch** eine Trägerplatte (22), die zumindest einen Teil des Mosaiks trägt und an der für jedes Beleuchtungssystem (1) der zugehörige Lichtaustrittskörper (2) befestigt ist.

## Claims

1. A wall, or ceiling, or floor (5) with a lighting system (1),
- with at least one punctiform light-emitting body (2), which is connected via an optical fibre (4) to a light source, and which in the installed state is positioned so as to be recessed with respect to a surface (6) of the wall, ceiling, or floor (5),
- with a translucent protective body (3), which in the installed state covers the light-emitting body (2) up to the surface (6), and is positioned so as to be flush with the surface (6),
- with a prism (13), which in the assembled state is positioned in the wall, ceiling, or floor (5) on a side of the protective body (3) facing away from the surface (6), and which is connected to the light-emitting body (2) so as to couple into the light, wherein
- in the region of the protective body (3) the wall, ceiling, or floor (5) is designed as a mosaic (8), which consists of a multiplicity of mosaic elements (9), which in a plan view onto the surface (6) possess essentially the same dimensions as the protective body (3) in question, wherein
- the protective body (3), prism (13) and light-emitting body (2) form a pre-assembled unit (18), wherein
- the mosaic (8) has a bed (10) of cement or adhesive, into which are embedded the unit (18), the optical fibre (4) in question, and the mosaic elements (9).

2. The wall, or ceiling, or floor in accordance with claim 1,
**characterised in that**
- the protective body (3) is equipped so as to be watertight, and/or tread-resistant, and/or scratch-resistant, and in the assembled state is built into the wall, ceiling, or floor (5) so as to be watertight, and/or tread-resistant, and/or scratch-resistant, and/or **in that**
- the protective body (3) consists of glass, safety glass, armoured glass, or acrylic glass.

3. The wall, or ceiling, or floor in accordance with claim 1 or 2,
**characterised in that**
- the prism (13) is arranged at a distance from the protective body (3), and/or **in that**
- the prism (13) has a recess (20) for purposes of coupling into the light from the light-emitting body (2).

4. The wall, or ceiling, or floor in accordance with one of the claims 1 to 3,
**characterised in that**
the prism (13) is surrounded by an opaque sleeve (16).

5. The wall, or ceiling, or floor in accordance with one of the claims 1 to 4,
**characterised in that**
- the prism (13) is a ground and/or faceted crystal body, or glass body, or gemstone body, or diamond body, and/or **in that**
- on its surface, apart from a light-emitting side (14) facing towards the protective body (3), the prism (13) is at least partially mirrored internally, and/or **in that**
- the prism (13) and the protective body (3) are securely connected with one another by means of the sleeve (16).

6. The wall, or ceiling, or floor in accordance with claim 5,
**characterised in that**
the protective body (3) and/or the prism (13) is attached to the sleeve (16) by means of a light-resistant, translucent, bubble-free adhesive.

7. The wall, or ceiling, or floor in accordance with one of the claims 4 to 6,
**characterised in that**
- the sleeve (16) also surrounds the protective body (3), and/or **in that**
- on a side facing away from the protective body (3), the sleeve (16) has an opaque base (17), by means of which the light-emitting body (2) is connected to the prism (13).

8. The wall, or ceiling, or floor in accordance with one of the claims 1 to 7,
**characterised in that**
the light-emitting body (2) has a deflecting section (7), which deflects the light supplied, and/or the optical fibre (4), through approximately 90°.

9. The wall, or ceiling, or floor in accordance with one of the preceding claims,
**characterised in that**
- the mosaic (8) has at least one installation unit (21), which possesses a support plate (22), on which at least a part of the mosaic (8) is pre-assembled.

10. An installation unit for the manufacture of a mosaic with a lighting system on a wall, or ceiling, or floor in accordance with one of the claims 1 to 9,
**characterised by** a support plate (22), which supports at least a part of the mosaic, and on which is attached the light-emitting body (2) in question for each lighting system (1).

## Revendications

1. Mur ou plafond ou plancher (5) avec un système d'éclairage (1),
- avec au moins un corps de sortie de lumière ponctuel (2) raccordé à une source de lumière par le biais d'une fibre optique (4) et positionné en retrait par rapport à une surface (6) du mur, du plafond ou du plancher (5) à l'état monté,
- avec un corps de protection transparent (3) protégeant le corps de sortie de lumière (2) par rapport à la surface (6) à l'état monté, tout en étant positionné en affleurement avec la surface supérieure (6),
- avec un prisme (13) positionné dans le mur, le plafond u le plancher (5), sur un côté du corps de protection (3) opposé à la surface supérieure (6) à l'état monté, et raccordé au corps de sortie de lumière (2) pour le couplage de la lumière,
- dans lequel le mur, le plafond ou le plancher (5) est conçu comme une mosaïque (8) dans la région du corps de protection (3), laquelle est composée d'une multitude d'éléments de mosaïque (9) présentant quasiment les mêmes dimensions que le corps de protection (3) respectif dans une vue d'au-dessus sur la surface supérieure (6),
- dans lequel le corps de protection (3), le prisme (13) et le corps de sortie de lumière (2) forment une unité prémontée (18),
- dans lequel la mosaïque (8) comporte un lit (10) de ciment ou de colle, dans lequel sont enrobés l'unité (18), la fibre optique (4) respective et les éléments de mosaïque (9).

2. Mur ou plafond ou plancher selon la revendication 1, **caractérisé en ce que**
- le corps de protection (3) est conçu étanche et/ou de façon à résister aux coups et/ou aux rayures, et encastré dans le mur, le plafond ou le plancher (5) de façon étanche et/ou de façon à résister aux coups et/ou aux rayures à l'état monté, et/ou **en ce que**
- le corps de protection (3) est constitué de verre de sécurité, de verre blindé ou de verre synthétique.

3. Mur ou plafond ou plancher selon la revendication 1 ou 2, **caractérisé en ce que**
- le prisme (13) est disposé à distance du corps de protection (3), et/ou **en ce que**
- le prisme (13) comporte un évidement (20) pour le couplage de la lumière du corps de sortie de lumière (2).

4. Mur ou plafond ou plancher selon l'une des revendications 1 à 3,
**caractérisé en ce que**
le prisme (13) est entouré par une gaine opaque (16).

5. Mur ou plafond ou plancher selon l'une des revendications 1 à 4,
**caractérisé en ce que**
- le prisme (13) est un corps cristallin ou un corps en verre ou un corps en pierre précieuse ou un corps en diamant taillé et/ou facetté, et/ou en ce que
- le prisme (13) est réfléchissant à sa surface, au moins partiellement vers l'intérieur, hormis sur son côté sortie de lumière (14) tourné vers le corps de protection (3), et/ou **en ce que**
- le prisme (13) et le corps de protection (3) sont reliés fixement entre eux par le biais de la gaine (16).

6. Mur ou plafond ou plancher selon la revendication 5,
**caractérisé en ce que**
le corps de protection (3) et/ou le prisme (13) est/sont fixé (s) à la gaine (16) à l'aide d'une colle sans bulles, transparente et insensible à la lumière.

7. Mur ou plafond ou plancher selon l'une des revendications 4 à 6,
**caractérisé en ce que**
- la gaine (16) entoure également le corps de protection (3), et/ou **en ce que**
- la gaine (16) présente un fond opaque (17) sur un côté opposé au corps de protection (3), à travers lequel le corps de sortie de lumière (2) est raccordé au prisme (13).

8. Mur ou plafond ou plancher selon l'une des revendications 1 à 7,
**caractérisé en ce que**
- le corps de sortie de lumière (2) présente une section de déviation (7) déviant la lumière renvoyée et/ou la fibre optique (4) d'environ 90°.

9. Mur ou plafond ou plancher selon l'une des revendications précédentes,
**caractérisé en ce que**
- la mosaïque (8) comporte au moins une unité d'installation (21) possédant une plaque de support (22) sur laquelle est prémontée au moins une partie de la mosaïque (8).

10. Unité d'installation pour la fabrication d'une mosaïque avec un système d'éclairage sur un mur, un plafond ou un plancher selon l'une des revendications 1 à 9,
**caractérisée par** une plaque de support (22) supportant au moins une partie de la mosaïque et sur laquelle est fixé le corps de sortie de lumière (2) correspondant à chaque système d'éclairage (1).
